# EUROPÄISCHE PATENTSCHRIFT

(11) **EP 3 483 124 B1**
(45) Veröffentlichungstag und Bekanntmachung des Hinweises auf die Patenterteilung: **18.05.2022**
(21) Anmeldenummer: 17209001.1
(22) Anmeldetag: 20.12.2017
(51) Int. Cl.: C02F 1/42, C02F 1/44, C02F 1/469, C02F 1/68, C02F 1/20, C02F 1/52, C02F 1/66, C02F 5/02

(54) **VERFAHREN ZUR HERSTELLUNG VON TRINKWASSER MIT HOHEM SILIKATGEHALT**
METHOD FOR THE PREPARATION OF DRINKING WATER WITH HIGH SILICATE CONTENT
PROCÉDÉ DE FABRICATION D'EAU POTABLE À HAUTE TENEUR EN SILICATE

(30) Priorität: 10.11.2017 DE 102017010475
(43) Veröffentlichungstag der Anmeldung: 15.05.2019
(60) Teilanmeldung: 22161058.7
(73) Patentinhaber: KRONES AG, 93073 Neutraubling (DE)
(72) Erfinder: SCHEU, Dirk, 93073 Neutraubling (DE)
(74) Vertreter: Grünecker Patent- und Rechtsanwälte PartG mbB

(56) Entgegenhaltungen:
- KR-A- 20120 028 108
- RU-C1- 2 463 059
- US-A1- 2004 188 352

## Beschreibung

Verfahren zur Herstellung von Trinkwasser mit hohem Silikatgehalt Die Erfindung bezieht sich auf ein Verfahren zur Herstellung von Trinkwasser mit hohem Silikatgehalt.

### Stand der Technik:

Vor dem Hintergrund des steigenden Trinkwasserverbrauchs, der u.a. in Verbindung mit sinkender Wasserqualität einhergeht, ist es heutzutage bei der Herstellung von Trinkwasser nötig, verschiedene Reinigungsschritte für die Aufbereitung von Rohwasser einzusetzen. Insbesondere ist es üblich, in Flaschen abgefülltes Trinkwasser durch Demineralisieren von Rohwasser z.B. mittels Umkehrosmose und anschließender Zugabe von Mineralsalzen herzustellen. Dabei erfolgt die Einstellung des pH-Werts oft durch Zugabe von Laugen oder Säuren bei der Mineralisierung oder vor der Umkehrosmose.

Dies hat den Vorteil, dass eine gleichbleibende Trinkwasserqualität und Sensorik auch bei Einsatz von unterschiedlichem Rohwasser gewährleistet werden kann. Weiter ist es dadurch möglich, verschiedenste Zusätze wie Mineralsalze, die gesundheitsförderliche Eigenschaften besitzen, gezielt dem Trinkwasser zuzusetzen. Die Hauptmineralbestandteile im Wasser sind Calcium, Magnesium, Natrium, Kalium, Bicarbonat, Sulfat, Chlorid, Nitrat, Fluorid und Silikat, die aus verschiedenen Gründen positive Auswirkungen auf den menschlichen Körper besitzen. So wird z.B. Calcium im menschlichen Körper für die Knochenbildung benötigt. Insbesondere besitzt das Element Silizium, das im Trinkwasser vornehmlich in der Form in von Silikat vorliegt, diverse positive Eigenschaften auf den menschlichen Körper, so dass es vorteilhaft ist, Silikate über das Trinkwasser aufzunehmen. Zum Beispiel ist bekannt, dass Silikate in der Lage sind, toxisches Aluminium zu binden, und so neurodegenerative Krankheiten wie z.B. Alzheimer zu verhindern bzw. zu lindern (V. Rondeau, American Journal of Epidemiology, 169, 4, 2009, Seiten 489-496; Exley et al., Journal of Alzheimers Disease, 10, 2006, Seiten 17-24).

Im Stand der Technik sind mehrere Ansätze bekannt, Silizium in höheren Konzentrationen im Trinkwasser anzureichern, um so dieses Element dem menschlichen Körper in ausreichenden Mengen zuzuführen. Die US 2014/0271995A1 zeigt z.B. ein Verfahren zum Herstellen von Trinkwasser, bei dem als Zusatzstoff SiO₂ zugegeben wird, um die gewünschte Menge an Silikat im Trinkwasser zu erzielen. Weiter offenbart die CN104098169B die Zugabe von amorphen Si-Kristallen als Partikel oder Pulver zu gereinigtem Wasser. Generell haben diese Ansätze den Nachteil, dass das Silizium in der Form von SiO₂ (d.h. Kieselsäure) eingesetzt wird. Kieselsäure weist aber eine relativ geringe Löslichkeit im sauren und neutralen pH-Bereich auf, so dass zumindest zum Teil aufwändige Prozessschritte wie z.B. Filterschritte durchgeführt werden müssen, um den gewünschten Silikatgehalt im Trinkwasser einzustellen und unerwünschte Partikel zu entfernen.

Weiter offenbaren die WO2011/009950 A1 und WO2011/010188 A1 Verfahren zum Anreichern von ortho-Kieselsäure ([Si(OH)₄]) in Trinkwasser, bei denen ein Umkehrosmose-Prozessschritt mit nachfolgender Elektrodialyse dazu benützt wird, um zunächst Silizium im Wasser anzureichern und danach unerwünschte Mineralstoffe zu entfernen. Diese Verfahren sind aber aus kommerzieller Sicht ungünstig, da sie nur das bei der Umkehrosmose anfallende Retentat (das mit Silizium angereichert ist) zur Trinkwasserherstellung verwenden, das erhaltene Permeat dagegen verworfen wird. Weitere relevante Dokumente sind KR 2012 0028108 A und RU 2 463 059C1.

Insgesamt haben die im Stand der Technik offenbarten Verfahren den Nachteil, dass sich nur unter hohem apparativem Aufwand Trinkwasser mit hohem Silikatgehalt in großtechnischen Mengen wirtschaftlich herstellen lässt.

Als alternative Siliziumquelle zu Kieselsäure existiert z.B. Wasserglas. Als Wasserglas werden wässrige Lösungen aus Natrium-, Kalium-, und/oder Lithiumsilikat bezeichnet, die eine hohe Löslichkeit in Wasser aufweisen. Insbesondere Wasserglas aus Natrium- oder Kaliumsilikaten ist kommerziell in großen Mengen erhältlich und beinhaltet gleichzeitig die trinkwasserrelevanten Elemente Natrium und Kalium, und könnte deswegen potentiell als Additiv für silikathaltiges Trinkwasser dienen. Allerdings wurde Wasserglas aus Natrium- oder Kaliumsilikaten bisher nicht zur kommerziellen Herstellung von Trinkwasser eingesetzt, da dies gleichzeitig mit einen hohen Anstieg der Natrium- und/oder Kaliumkonzentration im Trinkwasser verbunden wäre. Dies ist aus Gesundheitsgesichtspunkten unerwünscht und geht auch mit einer verschlechterten Sensorik einher.

### Aufgabe der vorliegenden Erfindung:

Somit ist die Aufgabe der vorliegenden Erfindung das Bereitstellen eines Verfahrens zum Herstellen von Trinkwasser, das einen hohen Silikatgehalt aufweist, bei dem die Konzentration anderer Mineralstoffe wie z.B. Natrium oder Kalium gezielt einstellbar ist, und das sich in großtechnischen Mengen wirtschaftlich herstellen lässt.

### Kurze Beschreibung der Erfindung:

Diese Aufgabe wird durch das Verfahren gemäß Anspruch 1 gelöst. Bevorzugte Ausführungsformen des Verfahrens sind in den Unteransprüchen 2 bis 10 definiert.

### Figuren:

Fig. 1 zeigt schematisch das Prinzip einer reversen Elektrodialyse mit einer Kation-, Anion- und Bipolarmembran.
Fig. 2 zeigt eine schematische Ausführungsform einer reversen Elektrodialyse unter ausschließlicher Verwendung einer Bipolar- und/oder Kationmembran.
Fig. 3 zeigt schematisch ein Ausführungsbeispiel einer Vorrichtung zur Herstellung von Trinkwasser mit hohem Silikatgehalt.
Fig. 4 zeigt schematisch ein weiteres Ausführungsbeispiel einer Vorrichtung zur Herstellung von Trinkwasser mit hohem Silikatgehalt.

### Detaillierte Beschreibung der Erfindung:

Das Verfahren zur Herstellung von Trinkwasser mit hohem Silikatgehalt gemäß der vorliegenden Erfindung umfasst die folgenden Schritte: Mischen von demineralisiertem Rohwasser mit einer Wasserglaslösung, umfassend Natrium- und/oder Kaliumsilikat, und Unterziehen von zumindest einem Teil der Mischung einem lonenaustauscherprozess zum Verringern der Konzentration an Natrium- und/oder Kaliumionen.

Das demineralisierte Rohwasser, das mit der Wasserglaslösung gemischt wird, kann durch geeignete Aufbereitungsprozesse von z.B. Grundwasser, Oberflächenwasser, Flusswasser oder Meerwasser hergestellt werden. Es können hierbei alle bekannten Verfahren zum Demineralisieren von Rohwasser verwendet werden. Insbesondere ist eine Demineralisierung über Umkehrosmose (englisch: reverse osmosis RO) bevorzugt. Dabei werden alle vorhandenen Mineralstoffe aus dem Wasser entfernt. Umkehrosmoseprozesse sind im Stand der Technik bekannt und werden hier nicht weiter beschrieben. Das demineralisierte Rohwasser entspricht dabei dem Permeat des Umkehrosmoseprozesses, von dem das sogenannte Retentat (d.h. der Anteil des Wassers, der nach der Umkehrosmose eine hohe Konzentration an Mineralstoffen aufweist) abgetrennt wurde. Der Begriff "demineralisiertes Rohwasser" im Sinne der vorliegenden Erfindung ist reines Wasser, das einen Gesamtfeststoffanteil von bevorzugt 5 ppm oder weniger besitzt. Der Gesamtfeststoffanteil entspricht dem Trockenrückstand. Zusätzlich können weitere Reinigungsprozesse zur Reinigung bzw. Aufbereitung von Rohwasser durchgeführt werden, die im Stand der Technik hinlänglich bekannt sind.

Der Begriff "Wasserglaslösung" gemäß der vorliegenden Erfindung definiert eine wässrige Lösung, umfassend Natrium- und/oder Kaliumsilikat, und ist bevorzugt eine gesättigte Lösung. In ausführungsformen ist die Konzentration an Natrium- und/oder Kaliumsilikat in der Wasserglaslösung 1 mol/l oder höher, bevorzugt 2 mol/l oder höher, mehr bevorzugt 3 mol/l oder höher, insbesondere bevorzugt größer 3,2 mol/l. Die Herstellung solcher Wasserglaslösungen ist im Stand der Technik bekannt und wird hier nicht weiter beschrieben.

Durch das Mischen des demineralisiertem Rohwassers und der Wasserglaslösung, umfassend Natrium- und/oder Kaliumsilikat, erfolgt das Herstellen einer Mischung, deren Silikatkonzentration je nach Mischungsverhältnis gezielt eingestellt werden kann, so dass ein Trinkwasser mit hohem Silikatgehalt erzielbar ist. Bevorzugte Mischungsverhältnisse von Wasserglaslösung zu Wasser liegen massenbezogen im Bereich zwischen 1:10 bis 1:10000, bevorzugt 1:100 bis 1: 5000, mehr bevorzugt 1:184 bis 1:3061.

Allerdings weist die Mischung des demineralisiertem Rohwassers und der Wasserglaslösung eine sehr hohe Konzentration an Natrium- und/oder Kaliumionen auf, so dass die Mischung, zumindest bei relevanten Mischungsverhältnissen in Bezug auf den Silikatgehalt, ohne eine nachfolgende Behandlung nur bedingt als Trinkwasser geeignet ist, da dies mit einer unerwünschten Sensorik einhergehen würde. Aus diesem Grund wird erfindungsgemäß zumindest ein Teil der Mischung einen lonenaustauschprozess unterzogen, um die Konzentration von Natrium- und/oder Kaliumionen zu verringern, d.h. um die gewünschte Konzentration an Natrium- und/oder Kaliumionen im resultierenden Trinkwasser einzustellen.

Alle gängigen lonenaustauschprozesse sind erfindungsgemäß einsetzbar. Beispiele sind u.a. Prozesse, die auf der Verwendung von Säulenaustauschern, Gleichstromaustauschern, Gegenstromaustauschern, Schichtbettaustauschern, Mehrkammeraustauschern, Mischbettaustauschern, Doppelflussaustauschern oder Sandwichaustauschern beruhen. Die Art der einsetzbaren Materialien ist nicht limitiert und umfasst z.B. Kunstharze, Tonmineralien oder Zeolithe. Weiter kann der lonenaustauschprozess durch elektrochemische Prozesse unter Verwendung von Membranen erfolgen, insbesondere über eine reverse Elektrodialyse und/oder eine Elektroionisation.

Der Begriff "Ionenaustauschprozess" gemäß der vorliegenden Erfindung umfasst alle Prozesse, die geeignet sind, Kationen, und insbesondere Natrium- und/oder Kaliumionen, aus der Mischung des demineralisierten Rohwassers und der Wasserglaslösung zu entfernen und durch H⁺ zu ersetzen. Dabei wird die Konzentration an Anionen, wie z.B. Silikat, durch den lonenaustauschprozess nicht verändert.

Der pH Wert der Wasserglaslösung bzw. der Mischung des demineralisiertem Rohwassers und der Wasserglaslösung liegt dabei bevorzugt im basischen Bereich, wie z.B. pH 9 oder höher, da dies eine höhere Löslichkeit des Natrium- und/oder Kaliumsilikat bedingt. So ist die Löslichkeit bei pH 9 oder höher 250 mg/l SiO₂ oder mehr. Im Vergleich dazu ist die Löslichkeit bei neutralem oder saurem pH geringer, z.B. ca. 150 bis kleiner als 250 mg/l SiO₂. Allerdings sinkt beim lonenaustauschprozess der pH wieder, so dass der Prozess bevorzugt so durchgeführt wird, dass das resultierende Trinkwasser einen neutralen pH Wert aufweist. Diese pH Wertverschiebung beim lonenaustauschprozess ist auch der Grund, wieso es nicht möglich ist eine gesättigte Wasserglaslösung einem lonenaustauschprozess zu unterziehen, da sonst beim Ionenaustauschprozess Silikat ausfallen würde. Beim erfindungsgemäßen Verfahren ist es somit notwendig, das Mischen des demineralisierten Rohwassers mit der Wasserglaslösung vor dem lonenaustauschprozess durchzuführen, d.h. es ist nicht möglich, eine konzentrierte Wasserglaslösung von Natrium- und/oder Kaliumionen zu befreien und das mineralisierte Rohwasser erst nach dem lonenaustauschprozess hinzuzufügen.

Mit diesem Verfahren ist es möglich, Trinkwasser, das einen hohen Silikatgehalt aufweist, in großtechnischen Mengen wirtschaftlich herzustellen. Weiter ist die Konzentration von anderen Mineralstoffen wie z.B. Natrium oder Kalium gezielt einstellbar.

In einer bevorzugten Ausführungsform ist der lonenaustauschprozess eine reverse Elektrodialyse und/oder eine Elektroionisation.

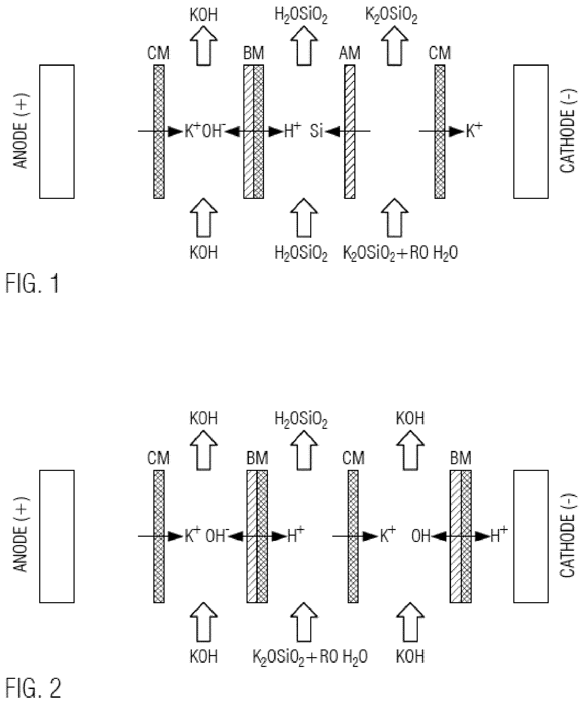

Eine reverse Elektrodialyse wird dabei bevorzugt verwendet, da damit eine besonders effektive Entfernung von Natrium-und/oder Kaliumionen möglich ist. Die reverse Elektrodialyse (englisch: "electrodialysis reversal"; EDR) verwendet elektrische Spannung um Ionen nach ihrer Ladung zu separieren. Das Prinzip der reversen Elektrodialyse mit einer Kation-, Anion- und Bipolarmembran ist in Fig. 1 gezeigt. Die wässrige Lösung aus demineralisiertem Rohwasser (RO H₂O) und einer Wasserglaslösung, umfassend Kaliumsilikat (K₂OSiO₂), wird dabei über eine Abfolge von Kationmembranen (CM), Anionmembranen (AM) und Bipolarmembranen (BM) durch Anlegen von elektrischer Spannung in Anionen und Kationen aufgeteilt. Dabei ist die Kationmembran so beschaffen, dass ausschließlich Kationen permeieren können, während ausschließlich Anionen durch die Anionmembran permeieren. Bipolaremembranen spalten Wassermoleküle in Wasserstoffionen und Hydroxidionen auf, wobei verhindert wird, dass andere Ionen auf die jeweils andere Seite der Membran wechseln. Nach Durchführen des Verfahrens ist ein Auftrennen in eine Säure und eine Base, d.h. Kieselsäure und Kaliumhydroxid, erfolgt. Für die Durchführung der reversen Elektrodialyse können kommerziell erhältliche Anlagen verwendet werden. Geeignete EDR Anlagen werden z.B. von den Herstellern MEGA a.s. / Czechia oder FUJiFilm Manufacturing Europe B.V. / Netherlands vertrieben. Die Durchführung der reversen Elektrodialyse erfolgt gemäß Herstellerangaben.

In einer bevorzugten Ausführungsform wird die reverse Elektrodialyse unter ausschließlicher Verwendung einer Bipolar- und/oder Kationmembran durchgeführt. Eine entsprechende Ausführungsform ist in Fig. 2 gezeigt, bei der lediglich Kationmembranen und Bipolarmembranen eingesetzt werden. Diese Ausführungsform ist vorteilhaft, da damit der lonentransfer schneller und effizienter durchgeführt werden kann. Weiter wurde überraschenderweise beobachtet, dass unvorteilhafte Gerüche, die insbesondere bei einer Ausführungsform gemäß Fig.1 unter Durchführung bei basischen pH-Werten aufgetreten sind, in der Ausführungsform gemäß Fig.2 nicht detektiert wurden. Ein weiterer Vorteil dieser Ausführungsform ist, dass kein signifikanter Verlust von Silikat in der Membran stattfindet. Außerdem ermöglicht eine solche Membrananordnung in einem EDR-System, dass verhindert wird, dass Sulfationen, die als Elektrolyt eingesetzt werden können, um die Leitfähigkeit zu erhöhen, ins Produkt wandern.

In einer anderen Ausführungsform ist der lonenaustauschprozess eine Elektrodeionisation (EDI). Elektrodeionisationsprozesse sind im Stand der Technik bekannt. Bevorzugt wird die EDI mit SAC-Harz im H⁺-Zyklus durchgeführt. Die Regeneration erfolgt bei der EDI kontinuierlich durch die angelegte Spannung und die damit verbundene Spaltung von Wasser an den Bipolarmembranen. Geeignete EDI Anlagen werden z.B. von den Herstellern SnowPure Water Technologies / USA oder EVOQUA Water Technologies LLC vertrieben. Die Durchführung der Elektrodeionisation erfolgt gemäß Herstellerangaben.

Bevorzugt ist die Wasserglaslösung eine Kaliumsilikat-Wasserglaslösung (CAS No. 1312-76-1). Kaliumsilikat-Wasserglaslösungen sind zwar geringfügig teurer als Natriumsilikat-Wasserglaslösungen. Allerdings haben Natriumsilikate aufgrund ihres spezifischen Herstellungsprozesses den Nachteil, dass unerwünschte Bestandteile, wie z.B. Amine, vorhanden sein können, die die Qualität und Sensorik des Wassers negativ beeinflussen.

Bevorzugt wird das Mischen des demineralisierten Rohwassers und der Wasserglaslösung so durchgeführt, dass die Konzentration des Silikats in der Mischung der Silikat-Endkonzentration im Trinkwasser entspricht. Die Silikat-Endkonzentration im Trinkwasser ist bevorzugt im Bereich von 50 mg/l oder höher, mehr bevorzugt 80 mg/l oder höher, insbesondere bevorzugt 100 mg/l oder höher. Eine solche Verfahrensausgestaltung ist kommerziell bevorzugt, da z.B. weitere Verdünnungsschritte entfallen. Weiter ist eine Silikat-Endkonzentration im Trinkwasser höher als die Konzentration üblicher Trinkwasser.

Bevorzugt wird der lonenaustauschprozess so durchgeführt, dass die Konzentration von Natrium- und/oder Kaliumionen der Endkonzentration im Trinkwasser entspricht. Bevorzugt ist die Konzentration der Natrium- und/oder Kaliumionen im Bereich von 0-20 mg/l, insbesondere im Bereich von 0-10 mg/l. Eine solch niedrige Konzentration ist aus Gesundheitsgesichtspunkten bevorzugt und zeigt keine verschlechterte Sensorik.

Durch das Verfahren ist insbesondere ein Trinkwasser erhältlich, das die folgenden Eigenschaften besitzt: pH: 6,5-8,5, Leitfähigkeit: 50 - 500 µS/cm, Ca: 0,5 - 50 mg/l, Mg: 0,5 - 50 mg/l, K: 0,5 - 20 mg/l, Na: 0,5 - 50 mg/l, Cl: 0,5 - 50 mg/l, HCO₃: 0,5 - 350 mg/l, SiO₂: 15 - 250 mg/l, Sulfat: 0,5 - 50 mg/l. Die Bestimmung des pH-Werts kann mittels Potentiometrie oder über ionensensitive Feldeffekt-Transistoren erfolgen. Für die Messung der Leitfähigkeit können handelsübliche Leitfähigkeitssensoren verwendet werden. Geeignete Messmethoden zum Ermitteln der Konzentrationen sind beispielsweise aus der DIN EN ISO 11885, DIN EN ISO 10304-1 oder DEV D8 bekannt.

In einer bevorzugten Ausführungsform umfasst das Verfahren weiter den Schritt des Einstellens der Konzentration von Calcium- und/oder Hydrogencarbonationen. Dieser Schritt wird nach dem lonenaustauschprozess durchgeführt. Das Einstellen wird bevorzugt mit einem Verfahren bewerkstelligt, das das Durchströmen von zumindest einem Teil der Mischung mit CO₂-Gas und anschließendem Kontaktieren mit festem Calciumcarbonat umfasst. Insbesondere wird dabei die mit CO₂-Gas versetzte Mischung über eine Mineralsäule bzw. über einen Filter oder ein Filterbett aus festem Calciumcarbonat (Kalkstein) geführt. Dabei entsteht Ca(HCO₃)₂. Die CO₂-Gas Zudosierung kann auch in einer Zirkulationsleitung erfolgen. Bevorzugt wird bei diesem Prozessschritt nur ein Teilstrom mit CO₂-Gas versetzt und über den Filter geführt. Anschließend wird der Teilstrom mit dem Bypassstrom zusammengeführt. Zur Überwachung der CO₂-Dosierung kann eine nachgeschaltete pH-Wert-Messung verwendet werden. Über das Kalk-Kohlensäure-Gleichgewicht kann somit auf den Rest-CO₂-Gehalt geschlossen werden. So ist beispielsweise ein gemessener pH-Wert von größer 8,2 ein Hinweis darauf, dass das gesamte CO₂ als HCO₃ und/oder Carbonat gebunden ist. Das grundlegende Prinzip ist z.B. in der WO2017/102913A1 offenbart. So lässt sich gezielt und effektiv die Calcium- und/oder Hydrogencarbonationen Konzentration im Trinkwasser einstellen.

In einer weiteren bevorzugten Ausführungsform umfasst das Verfahren zusätzlich einen Schritt des Einstellens der Konzentration von Magnesiumionen. Dieser Schritt wird nach dem lonenaustauschprozess durchgeführt. Die Einstellung der Konzentration der Magnesiumionen erfolgt in analoger Weise zum Schritt des Einstellens der Konzentration von Calcium- und/oder Hydrogencarbonationen, wobei nach dem Durchströmen von zumindest einem Teil der Mischung mit CO₂-Gas ein Kontaktieren mit festem, halbgebranntem Dolomit erfolgt. Halbgebrannter Dolomit umfasst CaCO₃·MgO. Hierbei ist zu berücksichtigen, dass durch das Kontaktieren mit halbgebranntem Dolomit auch ein Teil des Calciums gelöst wird, welcher für die Gesamtbetrachtung berücksichtigt werden muss. Alternativ kann zur Dosierung von Magnesium auch nicht gebrannter Dolomit benützt werden. So lässt sich gezielt und effektiv die Mg Konzentration im Trinkwasser einstellen.

Bevorzugt wird auch hierbei das Verfahren so durchgeführt, dass ein das Zuführen des CO₂-Gasstroms in den Prozessschritt des Einstellens der Konzentration von Calcium- und/oder Hydrogencarbonationen und in den Prozessschritt des Einstellens der Konzentration von Magnesiumionen kombiniert erfolgt. Dadurch ist eine besonders effektive Verfahrensausgestaltung möglich. Anschließend erfolgt bevorzugt ein Rückführen des CO₂-Gasstroms, das aus Umweltgesichtspunkten vorteilhaft ist.

Die Abfolge des Schritts des Einstellens der Konzentration von Calcium- und/oder Hydrogencarbonationen und des Schritts des Einstellens der Konzentration von Magnesiumionen ist beliebig. In einer bevorzugten Ausführungsform werden der Schritt des Einstellens der Konzentration von Calcium- und/oder Hydrogencarbonationen und der Schritt des Einstellens der Konzentration von Magnesiumionen in separaten Behältern durchgeführt. Somit können die Einzelprozesse leichter kontrolliert und gesteuert werden, so dass eine gezielte Dosierung der gewünschten Endkonzentrationen im Trinkwasser möglich wird. Allerdings ist erfindungsgemäß auch ein Verfahren umfasst, die dem die beiden Schritte in einem Behälter durchgeführt werden.

Weiter kann das Verfahren einen Schritt des Einstellens der Konzentration von Anionen enthalten. Dieser Schritt wird nach dem lonenaustauschprozess durchgeführt. Die Anionen sind dabei bevorzugt ausgewählt aus der Gruppe, umfassend Chlorid und Sulfat. Bevorzugt wird der Schritt des Einstellens der Konzentration von Anionen mit einem Verfahren durchgeführt, dass das Versetzen von zumindest einem Teil der Mischung mit einem oder mehreren Solen, bevorzugt CaCl₂, MgCl₂, MgSO₄, NaCl, NaF oder KF umfasst. Diese Sole werden vor der Zudosierung in Wasser gemischt und als Lösungen in entsprechenden Mengenverhältnissen zugegeben. Der Schritt des Einstellens der Konzentration von Anionen kann vor, zwischen der nach dem Schritt des Einstellens der Konzentration von Calcium- und/oder Hydrogencarbonationen und dem Schritt des Einstellens der Konzentration von Magnesiumionen durchgeführt werden. So lassen sich effektiv andere gewünschte Mineralsalze zudosieren.

In einer bevorzugten Ausführungsform ist das Trinkwasser mit hohem Silikatgehalt ein stilles Trinkwasser. Für das erfindungsgemäße Verfahren bedeutet das, dass das Verfahren weiter einen Schritt umfasst, bei dem CO₂, bevorzugt über eine Vakuumentgasung oder Membranentgasung, entfernt wird. Solche CO₂-Entgasungen sind bekannt und werden hier nicht weiter beschrieben. Bevorzugt wird das Entfernen des CO₂ mittels Vakuumentgasung, unter anderem unter Verwenden von O₂ als Strippgas, durchgeführt. Dieser Schritt wird vorzugsweise nach den Schritten zum Zudosieren von Mineralsalzen durchgeführt. Vorzugsweise erfolgt dabei die Einstellung des pH-Werts im Trinkwasser. Dabei kann bei der CO₂-Entfernung der pH-Wert als Regelgröße zur Steuerung verwendet werden.

Weiterhin wird eine Vorrichtung zur Herstellung von Trinkwasser offenbart, die nicht Gegenstand der Ansprüche ist.

Die Vorrichtung umfasst eine Mischvorrichtung zum Mischen von demineralisiertem Rohwasser und einer Wasserglaslösung, umfassend Natrium- und/oder Kaliumsilikat, und einen Ionenaustauscher zum Unterziehen von zumindest einem Teil der Mischung einem lonenaustauschprozess zum Verringern der Konzentration von Natrium- und/oder Kaliumionen. Diese Vorrichtung ist dazu geeignet ein Verfahren zur Herstellung von Trinkwasser mit hohem Silikatgehalt wie oben beschrieben durchzuführen. Mit dieser Vorrichtung ist Trinkwasser in großtechnischen Mengen wirtschaftlich herstellbar, das einen hohen Silikatgehalt aufweist, und bei dem die Konzentration anderer Mineralstoffe wie z.B. Natrium oder Kalium gezielt einstellbar ist. Weitere Vorteile und Ausführungsformen sind in Bezug auf das Verfahren beschrieben und gelten auch für die Vorrichtung.

Bevorzugt ist dabei der Ionenaustauscher ein Bauteil zum Durchführen einer reversen Elektrodialyse und/oder einer Elektroionisation. Bevorzugt ist eine reverse Elektrodialyse, umfassend ausschließlich Bipolar- und/oder Kationmembranen.

Die Vorrichtung umfasst bevorzugt ein oder mehrere der folgenden Bauteile: ein Bauteil zum Einstellen der Konzentration von Calcium- und/oder Hydrogencarbonationen, umfassend eine CO₂ Gas-Zuführungsreinheit und eine Filtereinheit umfassend festes Calciumcarbonat, und bevorzugt eine CO₂ Gas-Rückführungseinheit; ein Bauteil zum Einstellen der Konzentration von Magnesiumionen, umfassend eine CO₂ Gas-Zuführungseinheit und eine Filtereinheit umfassend halbgebrannten Dolomit, umfassend CaCO₃·MgO, und bevorzugt eine CO₂ Gas-Rückführungseinheit; ein Mischbauteil zum Einstellen der Konzentration von Anionen, ausgewählt aus der Gruppe umfassend Chlorid und Sulfat, bevorzugt umfassend eine Dosiereinheit zum Versetzen von zumindest einem Teil der Mischung mit einem oder mehreren Solen, bevorzugt CaCl₂, MgCl₂, MgSO₄, NaCl, NaF oder KF. Weiter kann die Vorrichtung ein Bauteil zum Entfernens von CO₂ aufweisen, bevorzugt umfassend eine Vakuumentgasungseinheit oder eine Membranentgasungseinheit, insbesondere eine Vakuumentgasungseinheit umfassend eine Dosiereinheit von O₂ als Strippgas.

Die Anordnung der Bauteile in der Vorrichtung ist beliebig, solange die entsprechenden Bauteile nach (d.h. stromabwärts) dem Ionenaustauscher angeordnet sind. Bevorzugt ist das Bauteil zum Entfernen von CO₂ das letzte Bauteil in stromabwärtiger Richtung.

Das Verfahren und die Vorrichtung sind insbesondere dazu geeignet ein Trinkwasser mit hohem Silikatgehalt herzustellen, das zur Behandlung von neurodegenerativen Krankheiten wie z.B. Alzheimer verwendet wird.

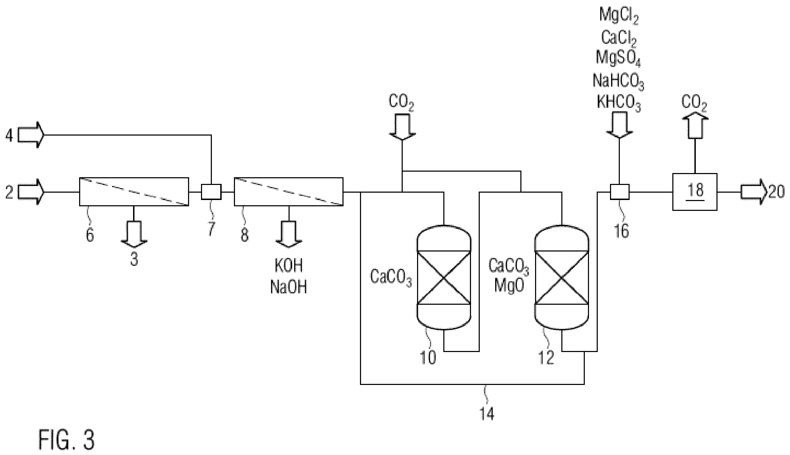

Fig. 3 zeigt schematisch eine nicht erfindungsgemäße Vorrichtung zur Herstellung von Trinkwasser mit hohem Silikatgehalt. Die Vorrichtung umfasst dabei als Bauteil zum Herstellen von demineralisiertem Rohwasser eine Umkehrosmoseeinheit 6, eine Mischvorrichtung 7 zum Mischen des demineralisierten Rohwassers und einer Wasserglaslösung, einen Ionenaustauscher 8, ein Bauteil 10 zum Einstellen der Konzentration von Calcium- und/oder Hydrogencarbonationen, umfassend eine CO₂-Gas-Zuführungseinheit und eine Filtereinheit umfassend festes Calciumcarbonat, ein Bauteil 12 zum Einstellen der Konzentration von Magnesiumionen, umfassend eine CO₂-Zuführungseinheit und eine Filtereinheit umfassend halbgebrannten Dolomit, eine gemeinsame Rückführleitung 14, um einen Teil des Wassers erneut durch die Filtereinheiten leiten zu können, ein Mischbauteil 16 zum Einstellen der Konzentration von Anionen, sowie ein Bauteil zum Entfernen von CO₂, nämlich die Vakuumentgasungseinheit 18.

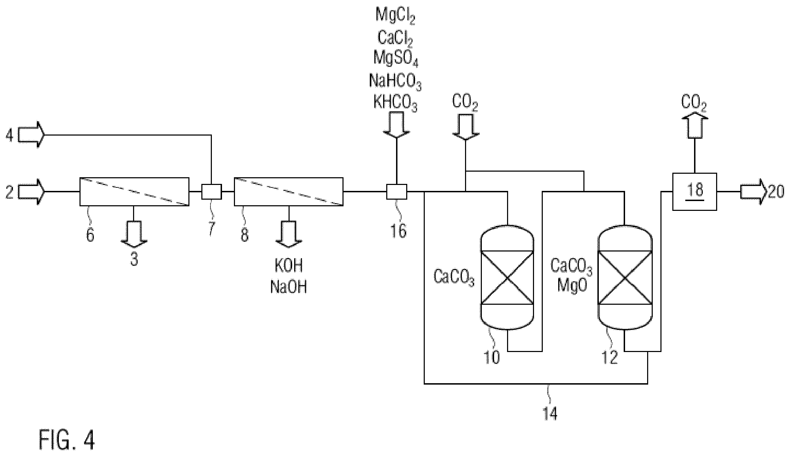

Die Abbildung gemäß Fig. 4 enthält analoge Baueinheiten, nur dass die Position des Mischbauteils 16 zum Einstellen der Konzentration von Anionen vor (d.h. stromaufwärts) den beiden Bauteilen 10 und 12 zum Einstellen der Konzentration von Calcium- und/oder Hydrogencarbonationen und Magnesiumionen angeordnet ist.

Mit den Vorrichtungen gemäß den Fig. 3 und Fig. 4 kann das erfindungsgemäße Verfahren wie folgt durchgeführt werden:
Gemäß Fig. 3 wird Rohwasser 2 in die Umkehrosmoseeinheit 6 eingespeist, in der demineralisiertes Rohwasser als Permeat hergestellt wird. Dabei wird mit Mineralstoffen konzentriertes Abwasser als Retentat 3 ausgeführt. In der Mischvorrichtung 7 wird anschließend das demineralisierte Rohwasser mit einer Wasserglaslösung 4, umfassend Natrium- und/oder Kaliumsilikat gemischt. Die Mischung wird anschließend im Ionenaustauscher 8 (z.B. über eine reverse Elektrodialyse) derart gereinigt, dass die Konzentration von Natrium- und/oder Kaliumionen in der Form von KOH und/oder NaOH abgeführt wird, und so die Konzentration der Natrium- und/oder Kaliumionen verringert wird. Dann wird über eine CO₂-Zuführungseinheit CO₂-Gas zugegeben und die Mischung in Bauteil 10, umfassend ein Filter mit festem Calciumcarbonat geleitet. Dabei wird über die Geschwindigkeit bzw. die Filtermenge beim Durchströmen die Konzentration von Calcium- und/oder Hydrogencarbonationen eingestellt. Dann wird die Mischung im Bauteil 12 über einen Filter aus halbgebranntem Dolomit geleitet. Bei Bedarf, z.B. bei zu geringer Konzentration, kann ein Teil des Wassers über eine Rückführleitung 14 erneut durch die Filter geleitet werden. Im anschließenden Mischbauteil 16 wird die Konzentration von Anionen durch Versetzen der Mischung mit ein oder mehreren Solen eingestellt. In einem letzten Schritt wird danach über die Vakuumentgasungseinheit 18 das restliche CO₂ entfernt, um ein stilles Trinkwasser 20 herzustellen.

Das Verfahren gemäß Fig. 4 erfolgt analog, mit der Ausnahme, dass das Einstellen der Konzentration der Anionen vor dem Einstellen der Konzentration der Calcium- und/oder Hydrogencarbonationen und vor dem Einstellen der Konzentration der Magnesiumionen erfolgt.

## Patentansprüche

1. Verfahren zur Herstellung von Trinkwasser mit hohem Silikatgehalt, umfassend die Schritte:
Mischen von demineralisiertem Rohwasser und einer Wasserglaslösung, umfassend Natrium- und/oder Kaliumsilikat,
Unterziehen von zumindest einem Teil der Mischung einem lonenaustauschprozess zum Verringern der Konzentration von Natrium- und/oder Kaliumionen.

2. Verfahren nach Anspruch 1, wobei der lonenaustauschprozess eine reverse Elektrodialyse und/oder eine Elektrodeionisation ist, bevorzugt unter ausschließlicher Verwendung einer Bipolar- und/oder Kationen-Membran.

3. Verfahren nach Anspruch 1, wobei die Wasserglaslösung eine Kaliumsilikat-Wasserglaslösung ist.

4. Verfahren nach Anspruch 1, wobei das Mischen des demineralisierten Rohwassers und der Wasserglaslösung so durchgeführt wird, dass die Konzentration des Silikats in der Mischung der Silikat Endkonzentration im Trinkwasser entspricht, und bevorzugt im Bereich von 50 mg/l oder höher, mehr bevorzugt 80 mg/l oder höher, insbesondere bevorzugt 100 mg/l oder höher, ist.

5. Verfahren nach Anspruch 1, wobei der lonenaustauschprozess so durchgeführt wird, dass die Konzentration von Natrium- und/oder Kaliumionen der Endkonzentration im Trinkwasser entspricht, bevorzugt im Bereich von 0-20 mg/l, insbesondere im Bereich von 0-10 mg/l liegt.

6. Verfahren nach Anspruch 1, weiter umfassend einen Schritt des Einstellens der Konzentration von Calcium- und/oder Hydrogencarbonationen, bevorzugt mit einem Verfahren, umfassend das Durchströmen von zumindest einem Teil der Mischung mit CO₂ Gas und anschließendes Kontaktieren mit festem Calciumcarbonat, bevorzugt unter Rückführen des CO₂ Gasstroms.

7. Verfahren nach Anspruch 1, weiter umfassend einen Schritt des Einstellens der Konzentration von Magnesiumionen, bevorzugt mit einem Verfahren, umfassend das Durchströmen von zumindest einem Teil der Mischung mit CO₂ Gas und anschließendes Kontaktieren mit halbgebranntem Dolomit, umfassend CaCO₃·MgO, bevorzugt unter Rückführen des CO₂ Gasstroms.

8. Verfahren nach Anspruch 1, wobei der Schritt des Einstellens der Konzentration von Calcium- und/oder Hydrogencarbonationen und/oder der Schritt des Einstellens der Konzentration von Magnesiumionen nach dem lonenaustauschprozess durchgeführt wird, und wobei der Schritt des Einstellens der Konzentration von Calcium- und/oder Hydrogencarbonationen und der Schritt des Einstellens der Konzentration von Magnesiumionen bevorzugt in separaten Behältern durchgeführt werden.

9. Verfahren nach Anspruch 1, weiter umfassend einen Schritt des Einstellens der Konzentration von Anionen, ausgewählt aus der Gruppe umfassend Chlorid und Sulfat, bevorzugt mit einem Verfahren, umfassend das Versetzen von zumindest einem Teil der Mischung mit einem oder mehreren Solen, bevorzugt CaCl₂, MgCl₂, MgSO₄, NaCl, NaF oder KF.

10. Verfahren nach Anspruch 1, weiter umfassend einen Schritt des Entfernens von CO₂, bevorzugt über Vakuumentgasung oder Membranentgasung, zur Einstellung des pH Werts im Trinkwasser, wobei das Entfernen bevorzugt mit Vakuumentgasung unter Verwenden von O₂ als Strippgas durchgeführt wird.

## Claims

1. Method for the production of drinking water with high silicate content, comprising the steps:
mixing of demineralized raw water and a waterglass solution, comprising sodium and/or potassium silicate,
subjecting at least one part of the mixture to an ion exchange process to reduce the concentration of sodium and/or potassium.

2. The method according to claim 1, wherein the ion exchange process is a reverse electrodialysis and/or an electrodeionization, preferably using only a bipolar and/or cation membrane.

3. The method according to claim 1, wherein the waterglass solution is a potassium silicate waterglass solution.

4. The method according to claim 1, wherein the mixing of the demineralized raw water and the waterglass solution is carried out in such a way that the concentration of the silicate in the mixture corresponds to the target concentration of the silicate in the drinking water, wherein the concentration preferably is in the range of 50 mg/L or higher, more preferred 80 mg/L or higher, in particular preferably 100 mg/L or higher.

5. The method according to claim 1, wherein the ion exchange process is carried out in such a way that the concentration of sodium and/or potassium corresponds to the target concentration in the drinking water, preferably in the range of 0-20 mg/L, especially in the range of 0-10 mg/L.

6. The method according to claim 1, further comprising a step of the adjustment of the concentration of calcium and/or hydrogen carbonate, preferably using a process wherein at least one part of the mixture is brought into contact with CO₂ gas and subsequently contacting with solid calcium carbonate, and preferably returning the CO₂ gas stream.

7. The method according to claim 1, further comprising a step of the adjustment of the concentration of magnesium, preferably with a method, comprising bringing at least one part of the mixture into contact with CO₂ gas followed by contacting with half-burned dolomite, comprising CaCO₃ .MgO, and preferably returning the CO2 gas stream.

8. The method according to claim 1, wherein the step of the adjustment of the concentration of calcium and/or hydrogen carbonate and/or the step of the adjustment of the concentration of magnesium are carried out after the ion exchange process is performed, and the step of adjusting the concentration of calcium and/or hydrogen carbonate and the step of the adjustment of the concentration of magnesium are preferably be carried out in separate containers.

9. The method according to claim 1, further comprising a step of adjusting the concentration of anions, selected from the group comprising chloride and sulphate, preferably with a method, comprising bringing at least one part of the mixture into contact with one or several soles, preferably CaCl₂, MgCl₂, MgSO₄, NaCl, NaF or KF.

10. The method according to claim 1, further comprising a step of removing CO₂, preferably via vacuum degassing or membrane degassing, to adjust the pH value in drinking water, wherein the removal preferably is carried out with vacuum degassing using O₂ as stripping gas.

## Revendications

1. Procédé de production d'eau potable à haute teneur en silicate, comprenant les étapes consistant à :
mélanger de l'eau brute déminéralisée et une solution de verre soluble comprenant du silicate de sodium et/ou de potassium,
soumettre au moins une partie du mélange à un procédé d'échange d'ions afin de réduire la concentration en ions sodium et/ou potassium.

2. Procédé selon la revendication 1, dans lequel le procédé d'échange d'ions est une électrodialyse inverse et/ou une électrodéionisation, utilisant de manière préférée exclusivement une membrane bipolaire et/ou cationique.

3. Procédé selon la revendication 1, dans lequel la solution de verre soluble est une solution de verre soluble à base de silicate de potassium.

4. Procédé selon la revendication 1, dans lequel le mélange de l'eau brute déminéralisée et de la solution de verre soluble est mis en œuvre de sorte que la concentration du silicate dans le mélange correspond à la concentration finale du silicate dans l'eau potable, et est de manière préférée supérieure ou égale à 50 mg/l, de manière particulièrement préférée supérieure ou égale à 80 mg/l, de manière particulièrement préférée supérieure ou égale à 100 mg/l.

5. Procédé selon la revendication 1, dans lequel le procédé d'échange d'ions est mis en œuvre de sorte que la concentration en ions sodium et/ou potassium correspond à la concentration finale dans l'eau potable, et se situe de manière préférée dans la plage comprise entre 0 et 20 mg/l, en particulier dans la plage comprise entre 0 et 10 mg/l.

6. Procédé selon la revendication 1, comprenant en outre une étape consistant à ajuster la concentration en ions calcium et/ou hydrogénocarbonate, de manière préférée grâce à un procédé comprenant les étapes consistant à faire circuler du CO₂ dans au moins une partie du mélange et à la mettre ensuite en contact avec du carbonate de calcium solide, de manière préférée avec recyclage du flux gazeux de CO₂.

7. Procédé selon la revendication 1, comprenant en outre une étape consistant à ajuster la concentration en ions magnésium, de manière préférée grâce à un procédé comprenant les étapes consistant à faire circuler du CO₂ dans au moins une partie du mélange et à la mettre ensuite en contact avec de la dolomie semi-calcinée comprenant du CaCO₃MgO, de manière préférée avec recyclage du flux gazeux de CO₂.

8. Procédé selon la revendication 1, dans lequel l'étape d'ajustement de la concentration en ions calcium et/ou hydrogénocarbonate et/ou l'étape d'ajustement de la concentration en ions magnésium est mise en œuvre après le procédé d'échange d'ions, et dans lequel l'étape d'ajustement de la concentration en ions calcium et/ou hydrogénocarbonate et l'étape d'ajustement de la concentration en ions magnésium sont de manière préférée mises en oeuvre dans des récipients séparés.

9. Procédé selon la revendication 1, comprenant en outre une étape consistant à ajuster la concentration en anions, choisis dans le groupe comprenant chlorure et sulfate, de manière préférée grâce à un procédé comprenant l'étape consistant à ajouter un ou plusieurs sol(s), de manière préférée CaCl₂, MgCl₂, MgSO₄, NaCl, NaF ou KF, à au moins une partie du mélange.

10. Procédé selon la revendication 1, comprenant en outre une étape consistant à éliminer le CO₂, de manière préférée par dégazage sous vide ou dégazage par membrane, afin d'ajuster la valeur pH de l'eau potable, dans lequel l'étape d'élimination est de manière préférée mise en œuvre grâce à un dégazage sous vide avec utilisation d'O₂ en tant que gaz d'extraction.
